# FASCICULE DE BREVET EUROPEEN

(11) **EP 2 671 280 B1**
(45) Date de publication et mention de la délivrance du brevet: **31.08.2016**
(21) Numéro de dépôt: 12707843.4
(22) Date de dépôt: 01.02.2012
(51) Int. Cl.: H01M 8/04225, H01M 8/0432, H01M 8/04537, H01M 8/04746, H01M 8/04029

(54) **SYSTÈME DE REFROIDISSEMENT POUR PILE À COMBUSTIBLE**
KÜHLSYSTEM FÜR EINE BRENNSTOFFZELLE
COOLING SYSTEM FOR A FUEL CELL

(30) Priorité: 02.02.2011 FR 1150825
(43) Date de publication de la demande: 11.12.2013
(73) Titulaire: Peugeot Citroën Automobiles SA, 78140 Vélizy Villacoublay (FR); Commissariat à l'Énergie Atomique et aux Énergies Alternatives, 75015 Paris (FR)
(72) Inventeur: GLIPA, Xavier, F-78480 Verneuil Sur Seine (FR); GARNIT, Sadok, F-92350 Le Plessis Robinson (FR); PINTON, Eric, F-38130 Echirolles (FR); LE GALLO, Patrick, F-38160 Saint-apolinard (FR); HAREL, Fabien, F-90200 Giromagny (FR); BEGOT, Sylvie, F-90330 Chaux (FR); LE CANUT, Jean-Marc, F-90000 Belfort (FR)
(74) Mandataire: Ménès, Catherine
(86) Numéro de dépôt international: PCT/FR2012/050221
(87) Numéro de publication internationale: WO 2012/104553

(56) Documents cités:
- EP-A1- 0 074 701
- JP-A- 2001 229 947
- JP-A- 2004 063 118
- JP-A- 2005 322 596
- JP-A- 2009 245 802
- US-A1- 2003 031 905
- US-A1- 2010 167 146

## Description

La présente invention concerne un système de refroidissement d'une pile à combustible génératrice d'électricité, elle concerne aussi un procédé de fonctionnement d'un tel système de refroidissement, ainsi qu'un groupe électrogène et un véhicule automobile équipés de ce système de refroidissement.

Les piles à combustible sont développées aujourd'hui en particulier pour équiper des véhicules en remplacement des moteurs thermiques, elles permettent en produisant de l'électricité utilisée par une machine électrique de traction, d'obtenir un meilleur rendement énergétique que celui des moteurs thermiques.

Les piles à combustible comportent généralement un empilement de cellules élémentaires comprenant deux électrodes séparées par un électrolyte, et deux plaques conductrices qui apportent le carburant et le comburant aux électrodes par des canaux internes. Les réactions électrochimiques qui se réalisent au contact des électrodes, génèrent un courant électrique et produisent de l'eau, tout en dégageant une énergie calorifique qui échauffe les différents composants.

Pour fonctionner correctement, les piles à combustible doivent se trouver à une certaine température comprise suivant le type entre 60 et 800°C. La chaleur dégagée par le démarrage des réactions quand la pile est froide, sert d'abord à échauffer les cellules pour les amener à la température de fonctionnement souhaitée.

Pour réguler la température des cellules, les piles à combustible comportent un système de refroidissement comprenant un circuit de fluide caloporteur mis en circulation par une pompe, qui vient au contact de ces cellules pour prélever des calories en se réchauffant. Le fluide circule ensuite dans un échangeur thermique pour se refroidir, notamment par échange avec l'air ambiant.

Un problème qui se pose dans le cas d'un démarrage de la pile à combustible se trouvant à une température basse inférieure à 0°C, est que l'eau produite par la réaction électrochimique risque de geler tant que cette température se trouve en dessous de ce seuil de 0°C. La pile à combustible ne peut alors plus fonctionner correctement, et risque d'être détruite.

Pour remédier à ce problème, un système de refroidissement connu, présenté notamment dans le document EP-A1-0074701, comporte un circuit de refroidissement comprenant une première boucle de circulation disposant d'un échangeur thermique et d'une pompe débitant toujours dans la même direction, et une deuxième boucle de circulation qui traverse les cellules.

Les deux boucles de circulation se recoupent en un point unique, au niveau d'une vanne à quatre voies qui peut être mise dans deux positions. Deux des quatre voies servent toujours l'une d'entrée et l'autre de sortie pour la première boucle de circulation, et les deux autres voies permettent de disposer cette deuxième boucle en série avec la première boucle, pour recevoir une circulation dans un sens pour une position de la vanne, et dans l'autre sens pour l'autre position.

Avec la pompe débitant dans la première boucle de manière continue dans une même direction, un actionnement automatique de la vanne quatre voies d'une position à l'autre, permet d'alterner le sens de passage du fluide caloporteur dans la deuxième boucle, et donc dans les cellules.

On réalise ainsi à froid par une alternance fréquente du sens de circulation du fluide dans les cellules, une circulation d'un même volume réduit de fluide traversant ces cellules dans un sens puis dans l'autre. En fonction du débit de fluide et de la fréquence d'alternance, le même volume de fluide sort d'un côté des cellules, pour y rentrer à nouveau après le changement de sens de circulation.

La mise en oeuvre d'un faible volume de fluide comportant un mouvement alterné, permet d'obtenir une bonne homogénéisation de la température en tous points des cellules, et entre les cellules situées au centre de l'empilage et celles des extrémités, par le fluide qui échange et répartit des calories, ainsi qu'une concentration de la chaleur qui reste dans les cellules et dans les parties des canalisations proches de ces cellules, le fluide ne circulant pas au delà de ces parties proches.

On peut obtenir ainsi un démarrage et une montée en température plus rapide de la pile à combustible, avant d'avoir à dissiper des calories vers l'extérieur par le mode de fonctionnement continu comprenant un sens unique de passage, dans lequel le fluide traverse les cellules et passe dans l'échangeur thermique pour se refroidir.

Un problème qui se pose avec ce circuit de refroidissement, est qu'il nécessite une vanne à quatre voies, qui est relativement complexe et couteuse à réaliser. De plus, les deux boucles se recoupant en un point unique, forment un circuit spécifique qui n'est pas toujours facile à réaliser simplement à partir d'un circuit conventionnel comprenant une seule boucle principale.

Il est également connu du document JP2004 063118 un système de pile à combustible comprend une pile, un passage pour antigel, dans lequel l'antigel passe à travers l'intérieur de la pile, un moyen de chauffage de l'antigel , une pompe d'antigel fournissant l'antigel au passage pour antigel , et des vannes de commutation de la direction d'écoulement de l'antigel. Le sens d'écoulement de l'antigel est changé au moins une fois tout en chauffant la pile : par exemple, le sens d'écoulement de l'antigel dans la pile est modifié lorsque la différence de température entre la température de consigne de chauffage du système et la température à l'orifice d'entrée dans la pile devient égale à la différence de température entre la température de la pile à l'étape initiale de réchauffement et la température à l' orifice de sortie dans la pile.

La présente invention a notamment pour but d'éviter ces inconvénients de la technique antérieure, et de proposer un circuit de refroidissement simple et efficace, permettant un démarrage rapide de la pile à combustible aux basses températures, c'est-à-dire inférieures à 0°C.

Elle propose à cet effet un système de refroidissement pour pile à combustible selon la revendication 1, comprenant un circuit principal de fluide caloporteur comportant une pompe de circulation et un échangeur thermique avec l'extérieur, qui alimentent une canalisation amont délivrant ce fluide aux cellules de la pile à combustible, le fluide ressortant des cellules par une canalisation aval pour revenir vers la pompe de circulation, caractérisé en ce que le circuit principal comporte sur chaque canalisation amont et aval une vanne pilotée à trois voies, la troisième voie disponible de la canalisation amont étant raccordée sur l'entrée de la pompe, et la troisième voie disponible de la canalisation aval étant raccordée sur la sortie de la pompe, pour établir un circuit secondaire de fluide.

Un avantage de ce système de refroidissement, est qu'en utilisant deux vannes trois voies simples et économiques, qui peuvent être disposées facilement dans la boucle d'un circuit conventionnel, et en les commutant simultanément, on peut avec un même sens de circulation de la pompe, faire alterner le sens de circulation du fluide dans les cellules.

La canalisation amont et la canalisation aval, comportent chacune un capteur de température qui est disposé près du raccordement avec les cellules.

Avantageusement, les vannes trois voies sont des vannes commandées simultanément en tout ou rien.

L'invention concerne aussi un procédé de fonctionnement d'un système de refroidissement comprenant l'une quelconque des caractéristiques précédentes, pilotant en fonction de paramètres de fonctionnement de la pile à combustible, la fréquence des alternances de commutation simultanée des deux vannes trois voies, pour établir le circuit secondaire ou rétablir le circuit principal.

Avantageusement, la fréquence maximale des alternances est sensiblement égale à deux fois le débit délivré par la pompe, divisé par le volume de fluide mis en oeuvre entre deux capteurs de température disposés près du raccordement des canalisations avec les cellules.

Selon un mode de fonctionnement du procédé, la fréquence d'alternance est déterminée en fonction de l'évolution de la température des cellules.

Selon un autre mode de fonctionnement du procédé, la fréquence d'alternance est déterminée pour une intensité donnée de courant délivré par des cellules, en fonction de l'évolution de la tension aux bornes de ces cellules.

Avantageusement, quand la tension délivrée par les cellules baisse avec des cellules se trouvant en surchauffe, la fréquence d'alternance est diminuée, et quand la tension monte, la fréquence d'alternance est augmentée.

L'invention a aussi pour objet un groupe électrogène disposant d'une pile à combustible comprenant un système de refroidissement comportant l'une quelconque des caractéristiques précédentes.

L'invention a de plus pour objet un véhicule électrique disposant d'une pile à combustible délivrant un courant électrique utilisé pour la traction, comprenant la caractéristique précédente.

L'invention sera mieux comprise et d'autres caractéristiques et avantages apparaîtront plus clairement à la lecture de la description ci-après donnée à titre d'exemple, en référence aux dessins annexés dans desquels :
- la figure 1 est un schéma d'un système de refroidissement pour une pile à combustible, selon l'invention ;
- la figure 2 est un graphique montrant les évolutions de la tension électrique V aux bornes des cellules de cette pile à combustible, présenté sur l'axe des ordonnées, en fonction du temps t présenté sur l'axe des abscisses, lors d'une régulation par une circulation alternée du fluide ; et
- la figure 3 est un graphique comparant le démarrage à basse température d'une pile à combustible, avec et sans l'invention.

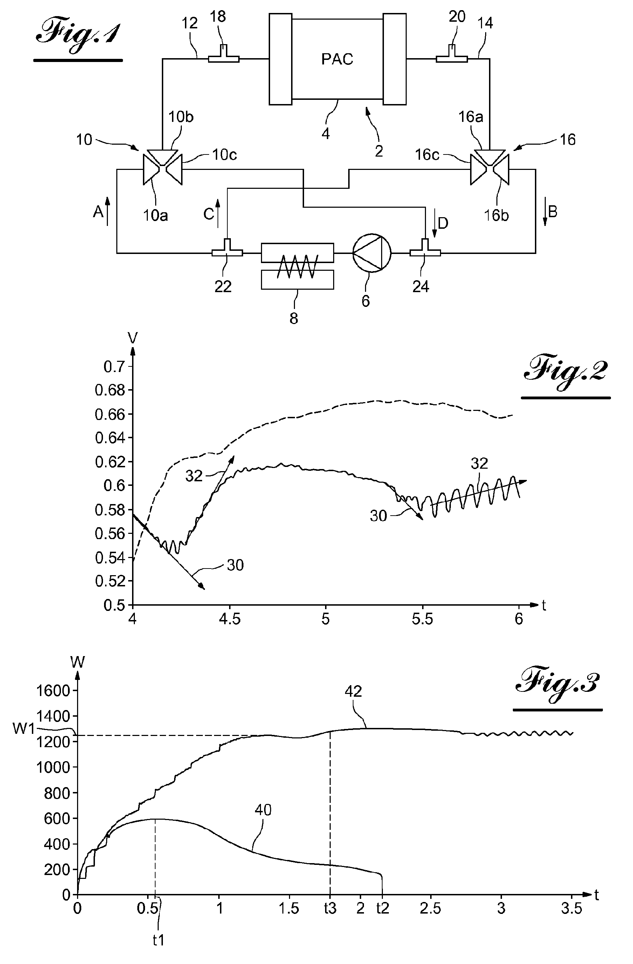

La figure 1 présente une pile à combustible 2 comprenant une série de cellules 4 traversées par un fluide caloporteur d'un système de refroidissement, géré par un calculateur non représenté contrôlant le système de refroidissement, qui peut être le calculateur de gestion de l'ensemble de la pile à combustible.

Le système de refroidissement comporte une pompe 6 comprenant un unique sens de rotation, qui génère un débit de fluide caloporteur traversant un échangeur thermique 8, pour refroidir ce fluide par échange des calories avec un autre fluide, par exemple avec l'air ambiant.

Dans un mode de fonctionnement continu du système de refroidissement, le fluide caloporteur mis en circulation par la pompe 6, parcourt un circuit principal dont le début est indiqué par la flèche A, et traverse une vanne trois voies amont 10 en entrant par la voie d'entrée 10a, pour sortir par la voie de sortie 10b, qui conduit ce fluide vers la canalisation amont 12 des cellules 4 de la pile à combustible.

Le fluide caloporteur ressort ensuite des cellules 4 par une canalisation aval 14, et traverse une vanne trois voies aval 16 en entrant par la voie d'entrée 16a, pour sortir par la voie de sortie 16b qui conduit ce fluide vers la fin du circuit principal indiqué par la flèche B, pour revenir vers la pompe 6.

Chaque canalisation 12, 14 reliée aux cellules 4 comporte un capteur de température 18, 20 du fluide caloporteur, qui est disposé au plus près de ces cellules.

De préférence, le capteur disposé dans la canalisation amont 12 est espacé de l'entrée de la pile d'une distance inférieure à 1/10 de la longueur de la pile. De même, le capteur disposé dans la canalisation avale 14 est espacé de la sortie de la pile d'une distance inférieure à 1/10 de la longueur totale de la pile.

On obtient ainsi un circuit principal comprenant un sens de circulation unique, qui permet dans un mode de fonctionnement normal de prélever des calories dans les cellules 4 pour les évacuer dans l'échangeur thermique 8.

En cas de démarrage de la pile à combustible à des températures inférieures à 0°C, et pour accélérer la montée en température des cellules afin d'éviter un gel de l'eau produite par la réaction électrochimique, le calculateur de contrôle du circuit de refroidissement maintient la rotation de la pompe 6 pour la faire débiter en permanence, et commande simultanément les deux vannes trois voies 10, 16 suivant des petites périodes successives, pour les mettre alternativement dans la position réalisant le circuit principal comme indiqué ci-dessus, puis dans une position réalisant un circuit secondaire.

Pour établir le circuit secondaire du fluide caloporteur, les deux vannes trois voies 10, 16 sont commutées chacune dans une deuxième position utilisant leur troisième voie.

On notera que les vannes trois voies 10, 16 sont des vannes commandées simultanément en tout ou rien, qui nécessitent un pilotage simple et économique.

Le fluide caloporteur sortant de l'échangeur thermique 8, passe par un premier raccord 22 en suivant le début du circuit secondaire indiqué par la flèche C, pour alimenter la troisième voie 16c de la vanne aval 16, puis ressort par la voie d'entrée 16a pour rentrer dans les cellules 4 par la canalisation aval 14.

Ensuite le fluide caloporteur sortant des cellules 4 par la canalisation amont 12, alimente la voie de sortie 10b de la vanne amont 10, puis ressort par la troisième voie 10c pour arriver à la fin du circuit secondaire indiqué par la flèche D, à un deuxième raccord 24 connecté à l'entrée de la pompe 6.

On obtient ainsi avec un minimum de modifications d'un circuit principal conventionnel, en ajoutant deux vannes trois voies 10, 16 simples et économiques, et en conservant un même sens de rotation de la pompe 6, un circuit secondaire permettant de faire circuler dans les cellules 4 le fluide caloporteur en sens inverse.

Pour le mode de fonctionnement alterné comprenant les inversions de sens de circulation du fluide caloporteur dans les cellules 4 en commutant simultanément les deux vannes trois voies 10, 16, le débit instantané est le même que celui du mode de fonctionnement continu, qui est calculé pour pouvoir refroidir les cellules 4 fonctionnant à leur puissance maximale. Ce débit tient compte par ailleurs de la viscosité du fluide caloporteur et de sa densité, pour que le mélange entre le fluide chaud et le fluide froid puisse se faire dans les cellules, de manière à obtenir un bon échange des calories et une homogénéité des températures.

L'invention consiste à faire circuler alternativement le fluide caloporteur dans la pile à combustible dans les deux sens possibles en conservant toutefois un sens unidirectionnel de circulation du fluide dans la pompe, pour exploiter lors d'un démarrage à froid la chaleur produite par la pile elle-même.

A cet effet, on alterne le sens de circulation du fluide au sein de la pile en sollicitant alternativement le circuit principal et le circuit secondaire, avec une fréquence variable et adaptée à l'évolution de température du liquide caloporteur ou tout autre paramètre de fonctionnement représentatif de cette température.

La fréquence varie selon les deux phases initiales suivantes :
- en début de démarrage de la pile à combustible, elle est élevée de manière à ce que l'énergie thermique dissipée par la réaction électrochimique réchauffe le plus rapidement possible un minimum de volume de fluide caloporteur, cette fréquence d'alternance élevée permettant de maintenir au sein de la pile pratiquement le même fluide qui, sitôt une extrémité de la pile atteinte, est redirigé en sens inverse vers l'extrémité opposée,
- après cette première phase d'échauffement de cette petite quantité de fluide, on diminue progressivement la fréquence d'alternance pour éviter une surchauffe de la pile et pour propager la chaleur cumulée par la petite quantité de fluide au reste du circuit.

Plus précisément, durant la première phase de fréquence d'alternance élevée, lors du démarrage à froid de la pile à combustible, on obtient un volume de fluide suffisamment réduit traversant les cellules 4, qui est mis en oeuvre dans les échanges thermiques. Le volume de fluide réduit se déplace et ressort des cellules en restant de part et d'autre près de ces cellules dans les canalisations amont 12 et aval 14, de manière à minimiser la masse de fluide à échauffer ainsi que les échanges thermiques avec l'extérieur.

Par ailleurs, ce volume de fluide mis en oeuvre doit permettre au fluide situé dans les cellules centrales 4, qui sont celles s'échauffant le plus, d'atteindre en fin de mouvement les capteurs de température 18, 20 pour qu'ils puissent suivre l'évolution de la température de ces cellules centrales. Dans ce cas, on fixe une fréquence d'alternance maximale F (en Hertz) est égale à deux fois le débit D (en litre/seconde) de la pompe, divisé par le volume de fluide V (en litre) mis en oeuvre entre les deux capteurs de température 18, 20.

L'invention permet ainsi le réchauffement homogène des cellules 4 à une température supérieure à 0°C, avant que la quantité d'eau délivrée par ces cellules n'ait saturé l'électrolyte, afin d'éviter un gel de cette eau non absorbée par cet électrolyte.

Une première méthode de contrôle de la fréquence des alternances du sens de circulation du fluide caloporteur, lors de la montée en température des cellules 4, est faite à partir du suivi des températures indiquées par les capteurs 18, 20.

Une élévation trop forte de cette température est limitée par la baisse de la fréquence d'alternance durant la deuxième phase intiale, qui met alors en oeuvre un volume de plus en plus important de fluide, en prélevant du fluide froid sur le reste du circuit. Autrement dit, on maitrise l'augmentation de gradient de température par celle de la fréquence d'alternance.

On arrive à la fin pour une température de fonctionnement nominale des cellules 4, comprise par exemple entre 20 et 80°C pour une pile à combustible à électrolyte solide polymère, et en particulier comprise entre 60 et 80°C pour des applications véhicule, à une fréquence d'alternance nulle qui est le mode de fonctionnement continu utilisant le circuit principal. On obtient avec ce mode un passage continu du fluide caloporteur dans les cellules 4 puis dans l'échangeur thermique 8, ce qui permet le plus grand échange de calories.

La figure 2 illustre une deuxième méthode de régulation de la température des cellules 4, à partir de cellules débitant une intensité du courant donnée, en effectuant un suivi du niveau de tension V en Volt de ces cellules en fonction du temps t en seconde, mesuré de préférence sur les cellules centrales qui sont celles qui s'échauffent le plus vite.

Après une baisse de tension V comme présentée par les flèches 30, ce qui traduit une surchauffe des cellules 4 due à la première phase initiale, on diminue lors de la deuxième phase initiale la fréquence d'alternance qui passe environ à 14 Hertz pour augmenter le volume de fluide mis en oeuvre, et réduire la température de ce fluide.

Après ces deux phases initiales et après une remontée de tension V comme présentée par les flèches 32, ce qui traduit un refroidissement des cellules 4, on augmente la fréquence d'alternance qui passe à environ 28 Hertz pour diminuer le volume de fluide mis en oeuvre, et remonter la température de ce fluide.

Avant un démarrage en température inférieure à 0°C, la pile doit être préalablement asséchée de manière à ce que l'eau produite pendant le démarrage soit absorbée par l'électrolyte et que la température des cellules soit supérieure à 0°C avant que l'électrolyte ne soit saturé en eau. De même, lors du démarrage à température inférieure à 0°C, la pile doit être alimentée en gaz réactifs secs. L'état d'assèchement préalable de la pile implique une valeur de résistance interne supérieure à la valeur nominale ce qui nécessite d'adapter la valeur de densité de courant lors du démarrage. Celle-ci peut être appliquée sous forme d'une rampe croissante d'intensité, dans le but de limiter la contrainte aux tous premiers instants du démarrage puis de disposer ensuite de la puissance thermique et électrique maximale.

La figure 3 présente en fonction du temps t en seconde, la courbe 40 de puissance électrique W en Watt délivrable pour une pile à combustible comprenant un système de refroidissement sans mode de fonctionnement alterné, et qui démarre avec une température initiale de -8°C. La puissance W disponible monte d'abord, puis rapidement diminue au temps t1, pour finir par s'annuler au temps t2 à cause de la saturation de l'électrolyte en eau, qui se met à geler.

La courbe 42 de puissance électrique W délivrable pour une pile à combustible comprenant un système de refroidissement avec un mode de fonctionnement alterné, et une régulation de la fréquence d'alternance présentée ci-dessus, qui démarre avec une température initiale de - 25°C, comporte une montée régulière de la puissance disponible, puis au temps t3 une stabilisation de cette puissance à la valeur W1, qui peut être maintenue pendant plusieurs minutes.

On constate avec l'invention que l'on obtient pour un démarrage à des températures beaucoup plus basses, une puissance disponible nettement plus élevée, et qui peut être maintenue.

La pile à combustible comprenant un système de refroidissement suivant l'invention, peut servir pour un véhicule automobile, mais aussi pour toutes applications stationnaires comme un groupe électrogène, dans lesquelles on recherche une montée en température rapide.

## Revendications

1. Système de refroidissement pour pile à combustible, comprenant un calculateur gérant le système de refroidissement et un circuit principal de fluide caloporteur comportant une pompe de circulation (6) et un échangeur thermique avec l'extérieur (8), qui alimentent une canalisation amont (12) délivrant ce fluide aux cellules (4) de la pile à combustible, le fluide ressortant des cellules par une canalisation aval (14) pour revenir vers la pompe de circulation, le circuit principal comportant sur chaque canalisation amont (12) et aval (14), une vanne pilotée à trois voies (10, 16), la troisième voie disponible (10c) de la canalisation amont (12) étant raccordée sur l'entrée de la pompe (6), et la troisième voie disponible (16c) de la canalisation aval (14) étant raccordée sur la sortie de la pompe, pour établir un circuit secondaire de fluide, la canalisation amont (12) et la canalisation aval (16), comportant chacune un capteur de température (18, 20) qui est disposé près du raccordement avec les cellules (4) **caractérisé en ce que** le calculateur est configuré pour faire varier en fonction de paramètres de fonctionnement de la pile à combustible, la fréquence (F) des alternances de commutation simultanée des deux vannes trois voies (10, 16), pour établir le circuit secondaire ou rétablir le circuit principal, avec une fréquence élevée au démarrage de la pile de manière à minimiser la masse de fluide à échauffer avec l'extérieur, puis une fréquence d'alternance basse pour limiter une élévation trop forte du fluide échauffé.

2. Système de refroidissement suivant la revendication 1, **caractérisé en ce que** les vannes trois voies (10, 16) sont des vannes commandées simultanément en tout ou rien.

3. Procédé de fonctionnement d'un système de refroidissement pour pile à combustible comprenant un circuit principal de fluide caloporteur comportant une pompe de circulation (6) et un échangeur thermique avec l'extérieur (8), qui alimentent une canalisation amont (12) délivrant ce fluide aux cellules (4) de la pile à combustible, le fluide ressortant des cellules par une canalisation aval (14) pour revenir vers la pompe de circulation, le circuit principal comportant sur chaque canalisation amont (12) et aval (14), une vanne pilotée à trois voies (10, 16), la troisième voie disponible (10c) de la canalisation amont (12) étant raccordée sur l'entrée de la pompe (6), et la troisième voie disponible (16c) de la canalisation aval (14) étant raccordée sur la sortie de la pompe, pour établir un circuit secondaire de fluide, la canalisation amont (12) et la canalisation aval (16), comportant chacune un capteur de température (18, 20) qui est disposé près du raccordement avec les cellules (4) **caractérisé en ce qu'**il fait varier en fonction de paramètres de fonctionnement de la pile à combustible, la fréquence (F) des alternances de commutation simultanée des deux vannes trois voies (10, 16), pour établir le circuit secondaire ou rétablir le circuit principal, avec une fréquence élevée au démarrage de la pile de manière à minimiser la masse de fluide à échauffer avec l'extérieur, puis une fréquence d'alternance basse pour limiter une élévation trop forte du fluide échauffé.

4. Procédé de fonctionnement suivant la revendication 3, **caractérisé en ce que** la fréquence maximale des alternances (F) est sensiblement égale à deux fois le débit (D) délivré par la pompe, divisé par le volume de fluide (V) mis en oeuvre entre deux capteurs de température (18, 20) disposés près du raccordement des canalisations (12, 14) avec les cellules (4).

5. Procédé de fonctionnement suivant la revendication 3 ou 4, **caractérisé en ce que** la fréquence d'alternance (F) est déterminée en fonction de l'évolution de la température des cellules (4).

6. Procédé de fonctionnement suivant la revendication 3 ou 4, **caractérisé en ce que** la fréquence d'alternance (F) est déterminée pour une intensité donnée de courant délivré par des cellules (4), en fonction de l'évolution de la tension (V) aux bornes de ces cellules.

7. Procédé de fonctionnement suivant la revendication 6, **caractérisé en ce que** quand la tension (V) délivrée par les cellules (4) baisse (30) avec des cellules se trouvant en surchauffe, la fréquence d'alternance (F) est diminuée, et quand la tension (V) monte (32), la fréquence d'alternance est augmentée.

8. Groupe électrogène disposant d'une pile à combustible comprenant un système de refroidissement selon la revendication 1.

9. Véhicule électrique comprenant une pile à combustible délivrant un courant électrique utilisé pour la traction, **caractérisé en ce qu'**il comprend un groupe électrogène selon la revendication 8.

## Patentansprüche

1. Kühlsystem für Brennstoffzelle, das einen Rechner umfasst, der das Kühlsystem steuert, und einen Wärmeträgerhauptkreislauf, der eine Umwälzpumpe (6) und einen Wärmetauscher mit dem Äußeren (8) umfasst, die eine stromaufwärtige Kanalisation (12) versorgen, die dieses Fluid zu den Zellen (4) der Brennstoffzelle liefert, wobei das Fluid aus den Zellen durch eine stromabwärtige Kanalisation (14) austritt, um zu der Umwälzpumpe zurückzukommen, wobei der Hauptkreislauf auf jeder stromaufwärtigen (12) und stromabwärtigen (14) Kanalisation ein gesteuertes Ventil mit drei Wegen (10, 16) umfasst, wobei der dritte verfügbare Weg (10c) der stromaufwärtigen Kanalisation (12) auf dem Eingang der Pumpe (6) angeschlossen ist, und der dritte verfügbare Weg (16c) der stromabwärtigen Kanalisation (14) auf dem Ausgang der Pumpe angeschlossen ist, um einen Fluidsekundärkreislauf herzustellen, wobei die stromaufwärtige Kanalisation (12) und die stromabwärtige Kanalisation (16) jeweils einen Temperatursensor (18, 20) umfassen, der nahe dem Anschluss mit den Zellen (4) angeordnet ist, **dadurch gekennzeichnet, dass** der Rechner konfiguriert ist, um in Abhängigkeit von Betriebsparametern der Brennstoffzelle die Frequenz (F) der Wechsel des gleichzeitigen Umschaltens der zwei Dreiwegeventil (10, 16), um den Sekundärkreislauf herzustellen oder den Hauptkreislauf wieder herzustellen, mit einer hohen Frequenz beim Starten der Zelle derart variieren zu lassen, dass die Fluidmasse, die mit dem Äußeren zu erhitzen ist, minimiert wird, dann eine niedrige Wechselfrequenz, um das zu starke Erhöhen des erhitzten Fluids zu begrenzen.

2. Kühlsystem nach Anspruch 1, **dadurch gekennzeichnet, dass** die Dreiwegeventile (10, 16) Ventile sind, die gleichzeitig EIN/AUS-gesteuert werden.

3. Betriebsverfahren eines Kühlsystems für Brennstoffzelle, das einen Wärmeträgerhauptkreislauf umfasst, der eine Umwälzpumpe (6) und einen Wärmetauscher mit dem Äußeren (8) umfasst, die eine stromabwärtige Kanalisation (12) versorgen, die dieses Fluid zu den Zellen (4) der Brennstoffzelle liefert, wobei das Fluid, das aus den Zellen durch eine stromabwärtige Kanalisation (14) austritt, um zu der Umwälzpumpe zurückzukommen, wobei der Hauptkreislauf auf jeder stromaufwärtigen (12) und stromabwärtigen (14) Kanalisation ein gesteuertes Dreiwegeventil (10, 16) umfasst, wobei der dritte verfügbare Weg (10c) der stromaufwärtigen Kanalisation (12) auf dem Eingang der Pumpe (6) angeschlossen ist, und der dritte verfügbare Weg (16c) der stromabwärtigen Kanalisation (14) auf dem Ausgang der Pumpe angeschlossen ist, um einen Fluidsekundärkreislauf herzustellen, wobei die stromaufwärtige Kanalisation (12) und die stromabwärtige Kanalisation (16) jeweils einen Temperatursensor (18, 20) umfassen, der nahe dem Anschluss mit den Zellen (4) angeordnet ist, **dadurch gekennzeichnet, dass** er in Abhängigkeit von Betriebsparametern der Brennstoffzelle die Frequenz (F) der Wechsel gleichzeitiger Umschaltung der zwei Dreiwegeventile (10, 16), um den Sekundärkreislauf herzustellen oder den Hauptkreislauf wieder herzustellen, mit einer hohen Frequenz beim Starten der Zelle derart variieren lässt, dass die Fluidmasse, die mit dem Äußeren zu erhitzen ist, minimiert wird, dann mit einer niedrigen Wechselfrequenz, um eine zu starke Erhöhung des erhitzten Fluids zu begrenzen.

4. Betriebsverfahren nach Anspruch 3, **dadurch gekennzeichnet, dass** die maximale Frequenz der Wechsel (F) im Wesentlichen gleich zwei Mal dem Durchsatz (D) ist, der von der Pumpe abgegeben wird, geteilt durch das Fluidvolumen (V), das zwischen zwei Temperatursensoren (18, 20), die nahe dem Anschluss der Kanalisationen (12, 14) mit den Zellen (4) angeordnet sind, umgesetzt wird.

5. Betriebsverfahren nach Anspruch 3 oder Anspruch 4, **dadurch gekennzeichnet, dass** die Wechselfrequenz (F) in Abhängigkeit von der Entwicklung der Temperatur der Zellen (4) bestimmt wird.

6. Betriebsverfahren nach Anspruch 3 oder 4, **dadurch gekennzeichnet, dass** die Wechselfrequenz (F) für eine gegebene Stromstärke, die von den Zellen (4) abgegeben wird, in Abhängigkeit von der Entwicklung der Spannung (V) an den Klemmen dieser Zellen bestimmt wird.

7. Betriebsverfahren nach Anspruch 6, **dadurch gekennzeichnet, dass**, wenn die Spannung (V), die von den Zellen (4) abgegeben wird, sinkt (30), während die Zellen in Überhitzung sind, die Wechselfrequenz (F) verringert wird, und, wenn die Spannung (V) steigt (32), die Wechselfrequenz erhöht wird.

8. Stromaggregat, das über eine Brennstoffzelle verfügt, die ein Kühlsystem nach Anspruch 1 umfasst.

9. Elektrofahrzeug, das eine Brennstoffzelle umfasst, die einen elektrischen Strom liefert, der für den Antrieb verwendet wird, **dadurch gekennzeichnet, dass** es ein Stromaggregat nach Anspruch 8 umfasst.

## Claims

1. A cooling system for a fuel cell, including a computer managing the cooling system and a main heat-transfer-fluid circuit comprising a circulation pump (6) and a heat exchanger (8) with the exterior, which feed an upstream pipe (12) supplying this fluid to the cells (4) of the fuel cell, said fluid leaving the cells via a downstream pipe (14) in order to return to the main circulation pump, the main circuit comprising a three-port controlled valve (10, 16) on each upstream (12) and downstream (14) pipe, the third available port (10c) of the upstream pipe (12) being connected to the inlet of the pump (6) and the third available port (16c) of the downstream pipe (14) being connected to the outlet of the pump in order to establish a secondary fluid circuit, the upstream pipe (12) and the downstream pipe (16) each comprising a temperature sensor (18, 20) which is disposed close to the connection with the cells (4), **characterized in that** the computer is configured to vary, as a function of operating parameters of the fuel cell, the frequency (F) of the alternations of simultaneous switching of the two three-port valves (10, 16), to establish the secondary circuit or to re-establish the main circuit, with an elevated frequency at the starting of the cell to minimize the mass of fluid to be heated with the exterior, then a low frequency of alternation to limit too great an elevation of the heated fluid.

2. The cooling system according to Claim 1, **characterized in that** the three-port valves (10, 16) are valves controlled simultaneously in an all-or-nothing manner.

3. An operating method of a cooling system for a fuel cell including a main heat-transfer-fluid circuit comprising a circulation pump (6) and a heat exchanger (8) with the exterior, which feed an upstream pipe (12) supplying this fluid to the cells (4) of the fuel cell, said fluid leaving the cells via a downstream pipe (14) in order to return to the main circulation pump, the main circuit comprising a three-port controlled valve (10, 16) on each upstream (12) and downstream (14) pipe, the third available port (10c) of the upstream pipe (12) being connected to the inlet of the pump (6), and the third available port (16c) of the downstream pipe (14) being connected to the outlet of the pump in order to establish a secondary fluid circuit, the upstream pipe (12) and the downstream pipe (16) each comprising a temperature sensor (18, 20) which is disposed close to the connection with the cells (4), **characterized in that** it varies, as a function of operating parameters of the fuel cell, the frequency (F) of the alternations of simultaneous switching of the two three-port valves (10, 16), to establish the secondary circuit or to re-establish the main circuit, with an elevated frequency at the starting of the cell so as to minimize the mass of fluid to be heated with the exterior, then a low frequency of alternation to limit too great an elevation of the heated fluid.

4. The operating method according to Claim 3, **characterized in that** the maximum frequency of the alternations (F) is substantially equal to twice the output (D) delivered by the pump, divided by the volume of fluid (V) used between two temperature sensors (18, 20) disposed close to the connection of the pipes (12, 14) with the cells (4).

5. The operating method according to Claim 3 or 4, **characterized in that** the frequency of alternation (F) is determined as a function of the development of the temperature of the cells (4).

6. The operating method according to Claim 3 or 4, **characterized in that** the frequency of alternation (F) is determined for a given intensity of current delivered by cells (4), as a function of the development of the voltage (V) at the terminals of these cells.

7. The operating method according to Claim 6, **characterized in that** when the voltage (V) delivered by the cells (4) drops (30) with cells being overheated, the frequency of alternation (F) is reduced, and when the voltage (V) rises (32), the frequency of alternation is increased.

8. An electricity-generating set having a fuel cell including a cooling system according to Claim 1.

9. An electric vehicle including a fuel cell delivering an electric current used for traction, **characterized in that** it includes an electricity-generating set according to Claim 8.
